# EUROPEAN PATENT SPECIFICATION

(11) **EP 3 281 807 B1**
(45) Date of publication and mention of the grant of the patent: **27.11.2019**
(21) Application number: 16776425.7
(22) Date of filing: 28.03.2016
(51) Int. Cl.: B60C 11/13

(54) **TIRE**
REIFEN
PNEUMATIQUE

(30) Priority: 10.04.2015 JP 2015080725
(43) Date of publication of application: 14.02.2018
(73) Proprietor: Bridgestone Corporation, Tokyo 104-8340 (JP)
(72) Inventor: MISHIMA, Sayaka, Tokyo 104-8340 (JP)
(74) Representative: Oxley, Robin John George
(86) International application number: PCT/JP2016/059870
(87) International publication number: WO 2016/163257

(56) References cited:
- EP-A2- 1 541 383
- WO-A1-2008/093481
- FR-A1- 2 715 891
- JP-A- 2004 224 268
- JP-A- 2009 160 991
- JP-A- 2013 071 634
- JP-A- 2014 012 470
- JP-A- 2014 012 477
- JP-A- 2014 012 482
- JP-A- 2014 156 246
- KR-A- 20120 094 772
- US-A- 2 819 751
- US-A1- 2008 073 012

## Description

### TECHNICAL FIELD

The present invention relates to a tire in which a groove extending in the tire circumferential direction is formed in the tread part.

### BACKGROUND ART

Conventionally, for pneumatic tires mounted on vehicles (hereinafter referred to as tires), various methods have been used to suppress the temperature rise of the tires when the vehicles are running. In particular, the temperature rise is significant for heavy duty tires mounted on trucks or buses.

In this respect, for example, a tire has been proposed in which projections are provided at the groove bottom of a groove formed in the tread part of the tire, the projections extending linearly from one groove wall to the other groove wall (for example, Patent Literature 1).

For such a tire, when the tire rolls, air flows passing inside the groove becomes turbulent due to the projections, and the turbulences promote heat dissipation from the tread part. This suppresses the temperature rise of the tread part. Attention is also drawn to the disclosures of FR2715891, KR2012-0094772, US2819751, WO2008/093481, EP1541383, JP2014-156246 and US2008/073012.

### CITATION LIST

### PATENT LITERATURE

Patent Literature 1: International Publication No. WO2012/090917

### SUMMARY OF INVENTION

### TECHNICAL PROBLEM

When a tire rolls and the land parts at both side of the groove come in contact with a road surface, the land parts are compressively deformed, while being bulgingly deformed in the direction in which the groove width narrows. Then, when the land parts at both side of the groove come apart from the road surface, the bulging deformation returns to the original state. In this way, every time the land parts of both sides of the groove come in contact with the road surface, the land parts are bulgingly deformed repeatedly in the direction in which the groove width narrows. Hence, the projections formed in the groove repeatedly receive compression forces from both sides, one groove wall and the other groove wall.

In a tire according to the conventional art, the projections are linearly continuous from one groove wall to the other groove wall. When such projections repeatedly receive the compression forces from both sides, repeated shear deformations occur locally at the center part of the projection in the tire width direction, and a crack may occur in the projection.

If such a crack occurs in the projection, the projection cannot generate the intended turbulence, and this may reduce the effect to suppress the temperature rise of the tread part, and countermeasures have been desired.

The present invention has been made in view of the above problems, and an object thereof is to provide a tire in which the durability of the projection is improved by curbing the occurrence of a crack in the projection formed in the groove, while positively suppressing the temperature rise of the tread part.

### SOLUTION TO PROBLEM

A tire according to the present invention is a tire in which a groove extending in a tire circumferential direction is formed in a tread part, wherein a projection extending in a direction intersecting the tire circumferential direction is provided at a groove bottom of the groove, and the projection includes in a tread surface view of the tire: a rectilinear part extending linearly at the center of the groove 70 in a direction inclined to the tire circumferential direction TC and intersecting a center line of the groove in a width direction of the groove, the center line of the groove passing along the center of the groove in the width direction the groove; and at least two curved parts continuing to the rectilinear part and curving in the tire circumferential direction, wherein the projection includes, as the at least two curved parts, a first curved part curving from one end of the rectilinear part in one direction of the tire circumferential direction and a second curved part curving from the other end of the rectilinear part in the other direction of the tire circumferential direction.

### BRIEF DESCRIPTION OF DRAWINGS

[Fig. 1] Fig. 1 is a cross-sectional view of a tire 1 according to a first embodiment of the present invention, taken along the tire width direction and the tire radial direction.
[Fig. 2] Fig. 2 is a partially broken perspective view of a groove according to the first embodiment of the present invention.
[Fig. 3] Fig. 3 is a plan view illustrating the shape of the groove according to the first embodiment of the present invention in a tread surface view.
[Fig. 4] Fig. 4 is an enlarged plan view of a projection according to the first embodiment of the present invention.
[Fig. 5] Fig. 5 is a cross-sectional view of the groove taken along the tire width direction and the tire radial direction when viewed from direction F1 in Fig. 3.
[Fig. 6] Fig. 6 is a cross-sectional view of the projection taken along line A-A in Fig. 3 and the tire radial direction.
[Fig. 7] Fig. 7 is a graph illustrating measurement results of measuring the relationship between angles of an extending direction of a rectilinear part with respect to the tire circumferential direction, and the heat transfer rate (shown as the index) at the groove.
[Fig. 8] Fig. 8 is a graph illustrating measurement results of measuring the relationship between a coefficient which the length L of the projection is multiplied by to define the predetermined interval P and the heat transfer rate at the groove.
[Fig. 9] Fig. 9 is a graph illustrating measurement results of measuring the relationship between a coefficient which the groove depth D is multiplied by to define the height H and the heat transfer rate at the groove.
[Fig. 10] Fig. 10 is a graph illustrating measurement results of measuring the relationship between a coefficient which the groove width W is multiplied by to define the curvature radius R of curved parts and the strain.
[Fig. 11] Fig. 11 is an enlarged plan view of a projection according to Modification 1 of the first embodiment.
[Fig. 12] Fig. 12 is an enlarged plan view of a projection according to Modification 2 of the first embodiment.

### DESCRIPTION OF EMBODIMENTS

### [First Embodiment]

### (1) Schematic Structure of Tire

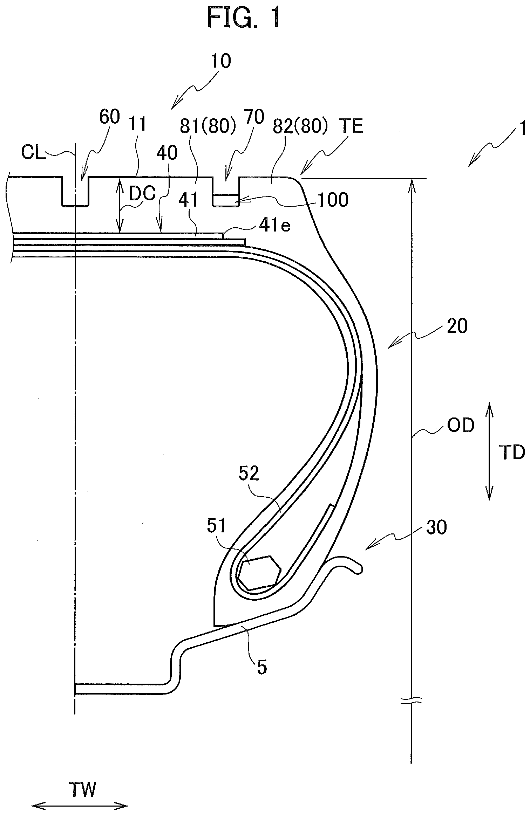

Descriptions will be provided for a tire according to a first embodiment of the present invention with reference to the drawings. First, a schematic structure of a tire 1 according to this embodiment will be described with reference to Fig. 1.

Fig. 1 is a cross-sectional view of the tire 1 according to the first embodiment, taken along a tire width direction TW and a tire radial direction TD. The tire 1 according to this embodiment has a symmetrical shape with respect to a tire equator line CL. Note that the tire 1 may have an asymmetrical shape.

The tire 1 according to this embodiment is assumed to be a pneumatic tire which is filled with air after assembled to a standard rim 5. Note that the gas filling the tire 1 assembled to the standard rim 5 is not limited to air, but the tire 1 may also be filled with an inert gas such as nitrogen gas. In addition, a cooling liquid (coolant) may be used for filling.

The tire 1 is preferably used for a heavy duty tire (TBR tire) mounted on a track or a bus (TB). The tire 1 has a thicker rubber gauge (rubber thickness) of a tread part 10 than pneumatic tires mounted on passenger vehicles or the like. Specifically, when OD is the tire outer diameter, and DC is the rubber gauge of the tread part 10 at the tire equator line CL, the tire 1 satisfies DC/OD ≥ 0.005.

Here, the tire outer diameter OD (unit: mm) is a diameter of the tire 1 at a portion where the outer diameter of the tire 1 is largest (generally, at the tread part 10 around the tire equator line CL). A rubber gauge DC (unit: mm) is the rubber thickness of the tread part 10 at the tire equator line CL. The rubber gauge DC does not include the thickness of a belt layer 40. Note that as illustrated in Fig. 1, in the case where a groove is formed at a position including the tire equator line CL, the rubber gauge DC is the rubber thickness of the tread part 10 at a position adjacent to the groove.

As illustrated in Fig. 1, the tire 1 includes the tread part 10 which comes in contact with a road surface, a side wall 20 continuing to the tread part 10 and positioned inward of the tread part 10 in the tire radial direction TD, and a bead 30 continuing to the side wall 20 and positioned inward of the side wall 20 in the tire radial direction TD.

The tread part 10 includes a tread ground contact surface 11 which comes in contact with a road surface when the tire rolls. Formed in the tread part 10 are grooves extending in the tire circumferential direction TC.

In this embodiment, a groove 60 provided on the tire equator line CL and a groove 70 provided on a tread end TE side of the tread ground contact surface 11 are formed in the tread part 10 as the grooves.

Here, in the tire 1 according to this embodiment, "tread end TE" means the outermost position in the tire width direction of the tread ground contact surface which is a tire surface coming in contact with a road surface (ground surface) in the state where the tire 1 is assembled to the standard rim 5 and filled with a standard internal pressure and a standard load is applied to the tire 1.

In addition, the "standard rim" means a normal rim specified in the following standard in accordance with the size of a tire, the "standard internal pressure" means an air pressure corresponding to the maximum load capacity of a single wheel in the applied size, which is specified in the following standard, and the "standard load" means the maximum load (maximum load capacity) of a single wheel in the applied size in the following standard. Then, the standard is an industrial standard effective for the area where the tire is produced or used. For example, in Japan, it is "JATMA YEAR BOOK" of "JAPAN AUTOMOBILE TIRE MANUFACTURES ASSOCIATION, INC."; in the United States, "YEAR BOOK" of "THE TIRE AND RIM ASSOCIATION, INC."; and in Europe, "STANDARD MANUAL" of "The European Tyre and Rim Technical Organisation".

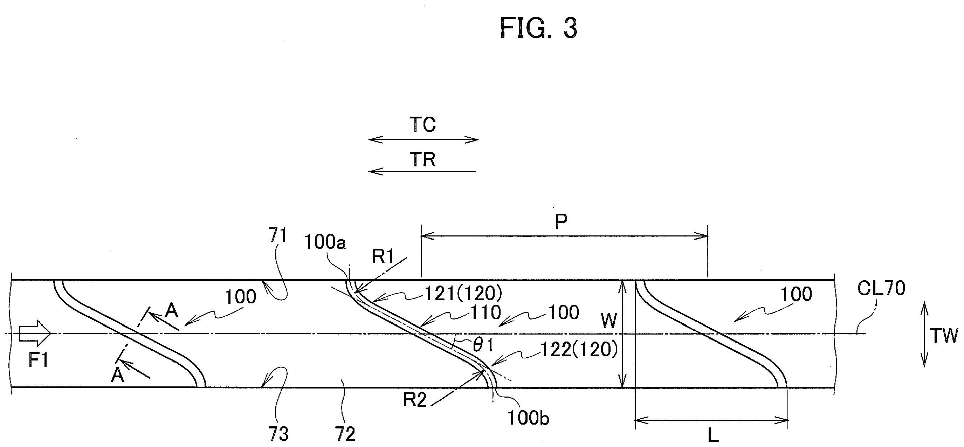

The groove 70 includes one groove wall 71, the other groove wall 73 facing the one groove wall 71, and a groove bottom 72 continuing to the one groove wall 71 and the other groove wall 73 (see Fig. 3).

Provided on the groove bottom 72 of the groove 70 are projections 100 extending in a direction intersecting the tire circumferential direction TC. Note that although the projections 100 may be provided in the groove 60 positioned on the tire equator line CL, it is preferable that the projections 100 be provided at least in the groove 70, which is the closest to an end in the tire width direction TW of a belt layer 40 to be described later.

This is due to the following reason. That is, since the temperature of the end of the belt layer 40 in the tire width direction TW tends to rise when the tire 1 rolls, it is preferable to provide the projections 100 at least in the groove 70 which is the closest to the end of the belt layer 40 in order to suppress the temperature rise effectively by means of the projections 100 formed in the groove. Note that the detailed structure of the projection 100 will be described later.

In the tread part 10, multiple sections of land parts 80 are formed by the groove 70 being formed. Specifically, formed inward of the groove 70 in the tire width direction TW is a land part 81, and formed outward of the groove 70 in the tire width direction TW is a land part 82. Note that in this embodiment, the land part 81 and the land part 82 are appropriately referred to simply as land parts 80.

Provided inward of the tread part 10 in the tire radial direction TD is the belt layer 40 including multiple belts 41. Arranged outward of an end 41e of a belt 41 in the tire radial direction TD is the groove 70 formed in the tread part 10.

Further, provided inward of the belt layer 40 in the tire radial direction TD is a carcass layer 52 spanning a pair of right and left bead cores 51 and forming a skeleton of the tire 1. Note that the ends of the carcass layer 52 are folded so as to wrap around the bead cores 51.

### (2) Structure of Projection

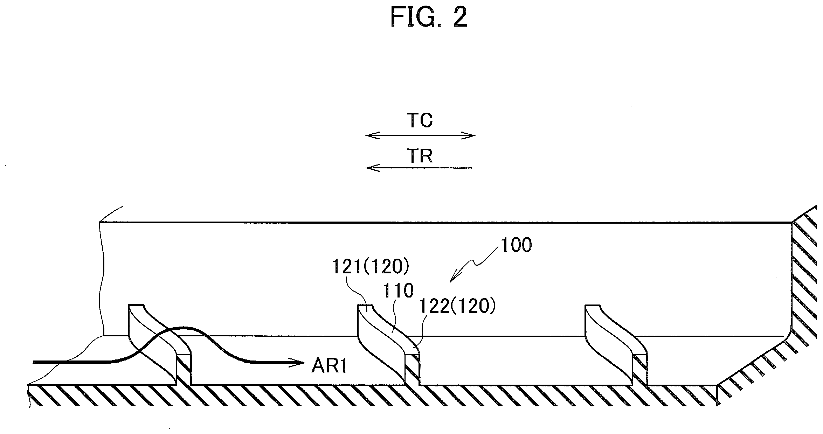

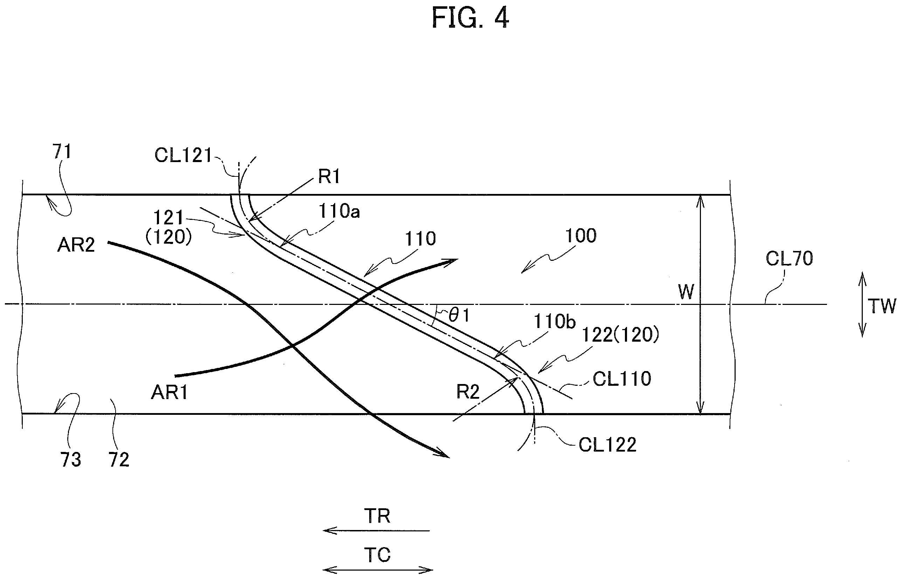

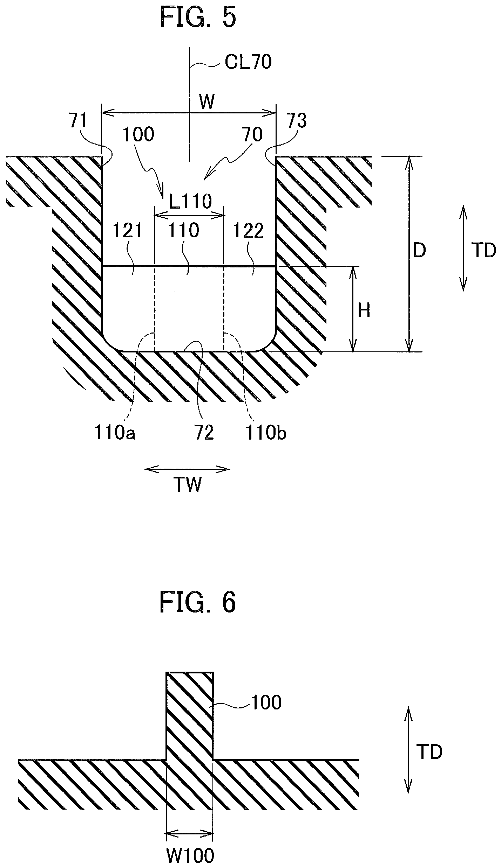

Next, the structure of the projection 100 will be described with reference to the drawings. Fig. 2 is a partially broken perspective view of a groove according to the first embodiment of the present invention. Fig. 3 is a plan view illustrating the shape of the groove according to the first embodiment of the present invention in a tread surface view. Fig. 4 is an enlarged plan view of the projection according to the first embodiment of the present invention. Fig. 5 is a cross-sectional view of the groove taken along the tire width direction and the tire radial direction when viewed from direction F1 in Fig. 3. Fig. 6 is a cross-sectional view of the projection taken along line A-A in Fig. 3 and the tire radial direction.

Here, as illustrated in Figs. 2 and 3, the rotational direction TR is defined in this embodiment, for convenience of explanation, as a direction in which the tire 1 rotates when a vehicle with the tire 1 mounted thereon moves forward. Note that the rotational direction TR when the tire 1 is mounted on a vehicle is not particularly specified.

As illustrated in Figs. 2 and 3, multiple projections 100 are provided in the groove 70. The projections 100 are provided in the tire circumferential direction TC with the predetermined intervals P.

In a tread surface view of the tire 1 as illustrated in Fig. 3, when L is the length of the projection 100 along the groove center line CL70 passing through the center of the groove 70, and P is the predetermined intervals in the tire circumferential direction TC, with which the projections 100 are formed, it is preferable that the predetermined interval P be 0.75 times or more and 10 times or less the length L. In other words, it is preferable that the relationship between the predetermined interval P and the length L satisfy 0.75L ≤ P ≤ 10L.

Note that the groove center line CL70 is a virtual line passing through the center in the groove width direction orthogonal to the extending direction of the groove 70, and is parallel with the tire circumferential direction TC in this embodiment. The length L is the length along the groove center line CL70 from one end to the other end of the projection 100. The interval P is the distance between two adjacent projections 100, and the distance between the centers of the projections 100 at which the projections 100 and the groove center line CL70 intersect.

In this embodiment, the projection 100 continues from the one groove wall 71 forming the groove 70 to the other groove wall 73 forming the groove 70. Specifically, one end 100a of the projection 100 is connected to the one groove wall 71, and the other end 100b of the projection 100 is connected to the other groove wall 73.

Note that in this embodiment, the one groove wall 71 is formed at the land part 81 which is inward of the groove 70 in the tire width direction TW, and the other groove wall 73 is formed at the land part 82 which is outward of the groove 70 in the tire width direction TW.

As illustrated in Fig. 4, in a tread surface view of the tire 1, the projection 100 includes a rectilinear part 110 and at least two curved parts 120.

The rectilinear part 110 extends linearly at the center of the groove 70 in a direction inclined to the tire circumferential direction TC. Here, the center of the groove 70 means positions on the groove center line CL70 passing along the center of the groove 70 in the groove width direction. Note that in other words, the center line CL110 of the rectilinear part 110 is arranged to intersect the groove center line CL70.

The curved part 120 continues to the rectilinear part 110 and curves toward the tire circumferential direction TC. Provided to the projection 100 are multiple curved parts 120.

Specifically, the projection 100 includes, as the curved parts 120, a first curved part 121 curving in one direction of the tire circumferential direction TC and a second curved part 122 curving in the other direction of the tire circumferential direction TC.

The first curved part 121 is connected to one end 110a of the rectilinear part 110 and the one groove wall 71. The second curved part 122 is connected to the other end 110b of the rectilinear part 110 and the other groove wall 73. Note that in the following, the first curved part 121 and the second curved part 122 are appropriately referred to simply as the curved parts 120.

When the groove width W is the width of the groove 70, it is preferable that the curvature radius R of the curved part 120 in a tread surface view of the tire 1 be within the range of 3 times or more and 10 times or less the groove width W. Specifically, it is preferable that both the curvature radius R1 of the first curved part 121 and the curvature radius R2 of the second curved part 122 be 3 times or more and 10 times or less the groove width W, and that the relation 3W ≤ R1 (and R2) ≤ 10W be satisfied.

Note that the groove width W is the width of the groove 70 in the groove width direction orthogonal to the extending direction of the groove 70. In this embodiment, since the extending direction of the groove 70 is the tire circumferential direction TC, the groove width W is the width of the groove 70 in the tire width direction TW orthogonal to the tire circumferential direction TC.

In this embodiment, the curvature radius R1 of the first curved part 121 and the curvature radius R2 of the second curved part 122 are the same. However, the curvature radius R1 of the first curved part 121 and the curvature radius R2 of the second curved part 122 do not necessarily need to be the same. In other words, the curvature radii of the multiple curved parts 120 may be different from one another. For example, in the case where the one groove wall 71 is deformed more than the other groove wall 73, the relationship between the curvature radius R1 of the first curved part 121 and the curvature radius R2 of the second curved part 122 may satisfy R2 > R1.

In this embodiment, it is preferable that the angle θ1 formed between the extending direction of the rectilinear part 110 and the tire circumferential direction TC be within the range of 10 to 60 degrees. Specifically, it is preferable that the angle θ1 formed between the center line CL110 along the extending direction of the rectilinear part 110 and the groove center line CL70 along the tire circumferential direction TC be within the range of 10 to 60 degrees.

As illustrated in Fig. 5, it is preferable that the length L110 of the rectilinear part 110 in the tire width direction TW be 40 % or more and 90% or less of the groove width W.

When H is the height of the projection 100 from the groove bottom 72, and D is the depth of the groove 70 from the tread ground contact surface 11 to the groove bottom 72 (the deepest part), it is preferable that the height H be 0.03 times or more and 0.4 times or less the depth D. In other words, it is preferable that the relationship between the height H and the depth D satisfy 0.03D < H ≤ 0.4D.

As illustrated in Fig. 6, in this embodiment, it is preferable that the width W100 of the projection 100 be 1 mm or more and 4 mm or less. The width W100 of the projection 100 is the length of the projection 100 in the direction orthogonal to the center line. For example, the width W100 of the projection 100 may be defined as the length of the projection 100 in the direction orthogonal to the center line CL110 of the rectilinear part 110.

Note that in this embodiment, the width W100 of the projection 100 is the same at the rectilinear part 110, the first curved part 121, and the second curved part 122. However, the width of the rectilinear part 110, the width of the first curved part 121, and the width of the second curved part 122 do not necessarily need to be the same. For example, in the case where the one groove wall 71 is deformed more than the other groove wall 73, the width of first curved part 121 extending from the one groove wall 71 may be larger than the width of the rectilinear part 110 or the width of the second curved part 122.

### (3) Operation • Effect

For the tire 1 according to this embodiment, since projections 100 are formed on the groove bottom 72 of the groove 70 extending in the tire circumferential direction TC, rotation of the tire 1 causes air flows AR1 and AR2 (relative wind) in the direction opposite to the rotational direction TR in the groove 70 (see Fig. 4).

Specifically, a part of the air flow AR1 along the other groove wall 73 of the groove 70 cannot proceed along the groove 70 because of the projection 100 positioned in the traveling direction, hence go over the projection 100. At this time, the air flow AR1 changes into a spiral (swirling) flow. In addition, because the air flow AR1 proceeds pulling surrounding air, the amount of air flow increases and the speed of the air flow AR1 increases. This promotes heat dissipation from the tread part 10.

A part of the air flow AR2 along the one groove wall 71 of the groove 70 proceeds along the extending direction of the projection 100. Thereafter, on the other groove wall 73 side of the groove 70, the air flow AR2 flows out of the groove 70. As a result, since the air accumulating heat by passing inside the groove 70 flows to the outside, heat dissipation from the tread part 10 is promoted.

In the tire 1 according to this embodiment, the projection 100 includes the rectilinear part 110 extending linearly and the curved parts 120 curving in the tire width direction TW (the first curved part 121 and second curved part 122).

Here, as in the case of the conventional art, when a projection including only a rectilinear part receives compression force from land parts 80 on both sides, a crack occurs because the strain (deformation) due to the compression force concentrates at the center part of the projection in the tire width direction (around the groove center line CL70).

In contrast, in the tire 1 according to this embodiment, when the tire rolls and the projection 100 receives the compression force from the land parts 80 on both sides due to the deformations of the land parts 80 on both sides of the groove 70, the curved parts 120 deform so as to be bent. In other words, the curved parts 120 prevent the compression force from being concentrated at the center part of the projection 100 and disperse it. Hence, the strain (deformation) due to the compression force received from the land parts 80 on both sides are prevented from being concentrated locally at the center part of the projection 100.

Further, when the projection 100 receives tensile force from the land parts 80 on both sides, the curved parts 120 can be deformed also so as to extend, and the strain (deformation) due to the tensile force are prevented from being concentrated locally at the center part of the projection 100.

Note that when the projection including only the rectilinear part as in the conventional art receives the compression force from the land parts 80 on both sides, there is a case where strain (deformation) is generated in the projection, and consequently, a part of the projection 100 is strained like the curved parts 120. In other words, it can also be expressed that for the projection 100 according to this embodiment, the strain is prevented from being concentrated locally at the center part of the projection 100 by forming in advance the shape of the projection in a state where the projection is deformed due to the reception of the compression force.

As described above, the tire 1 according to this embodiment curbs the occurrence of a crack in the projection 100 by dispersing the strain generated in the projection 100, which makes it possible to positively generate intended turbulences with the projection 100. Further, since the projection 100 has the rectilinear part 110, it is possible to positively generate intended turbulences, which makes it possible to more positively suppress the temperature rise, compared to the case where the projection 100 only includes the curved parts 120. In other words, in this embodiment, it is possible to improve the durability of the projection 100 and positively suppress the temperature rise of the tread part 10 by curbing the occurrence of a crack in the projection 100.

In addition, from the viewpoint of causing the curved parts 120 to positively absorb the compression force received from the land parts 80 on both sides, it is preferable that the curved parts 120 of the projection 100 be arranged to be connected to the land parts 80 on both sides. In other words, it is preferable that the curved parts 120 be arranged between the one end 110a of the rectilinear part 110 and the one groove wall 71 and between the other end 110b of the rectilinear part 110 and the other groove wall 73.

In the tire 1 according to this embodiment, the projection 100 continues from the one groove wall 71 forming the groove 70 to the other groove wall 73 forming the groove 70. This makes sure that the air flowing in the groove 70 collides with the projection 100, which enables the projection 100 to positively generate turbulences.

In addition, for the tire 1 according to this embodiment, it is preferable that the angle θ1 formed between the center line CL110 along the extending direction of the rectilinear part 110 and the tire circumferential direction TC be within the range of 10 to 60 degrees.

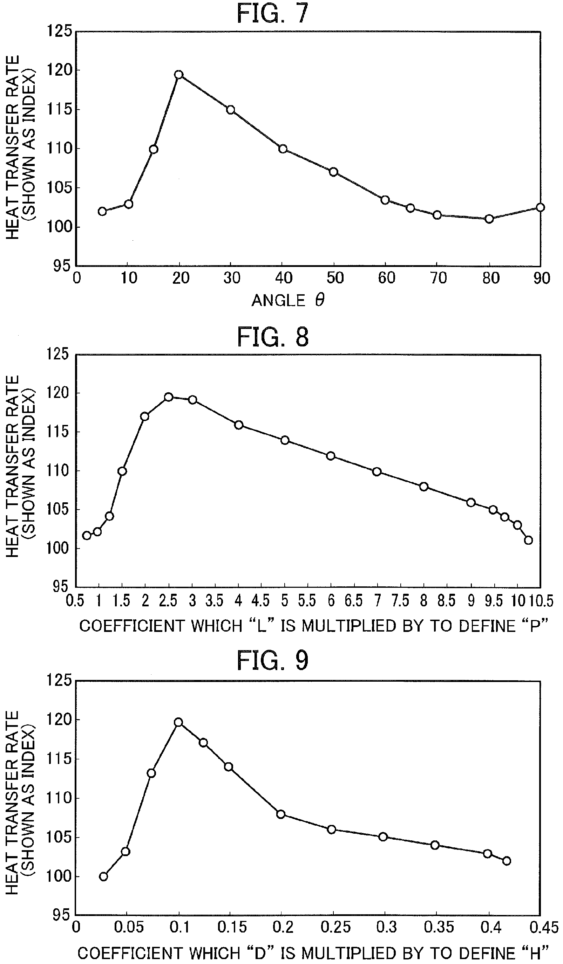

Here, Fig. 7 shows a graph illustrating measurement results of measuring the relationship between the angle of rectilinear part 110 with respect to the tire circumferential direction TC and the heat transfer rate (showing the index) at the groove 70. Note that in the graph of Fig. 7, the value "100" of the heat transfer rate indicates the heat transfer rate of a tire which is not provided with the projection 100 (reference value).

As illustrated in Fig. 7, when the angle θ1 is 10 degrees or more, it is possible to curb the weakening of the air flows AR1 and AR2 flowing along the rectilinear part 110 of the projection 100. In addition, since it is easy to manufacture the projections 100 in the groove 70, the convenience in manufacturing is improved.

On the other hand, when the angle θ1 is 60 degrees or less, it is possible to efficiently change the air flow AR2 flowing in the groove 70 into a spiral flow. This increases the amount of air passing through the groove bottom 72, and dissipates heat efficiently from the tread part 10.

Note that it is more preferable that the angle θ1 be 15 degrees or more and 40 degrees or less. With this, as illustrated in Fig. 7, the heat transfer rate exceeds the value "103" where the effect is positively obtained when the tire is mounted, and the certainty of the effect of suppressing the temperature rise of the tread part 10 is improved.

In addition, for the tire 1 according to this embodiment, when L is the length of the projection 100 along the groove center line CL70 passing through the center of the groove 70 and P is the predetermined intervals between the projections 100 in the tire circumferential direction TC, in a tread surface view of the tire 1, it is preferable to satisfy the relation 0.75L ≤ P ≤ 10L.

Here, Fig. 8 shows a graph illustrating measurement results of measuring the relationship between a coefficient which the length L of the projection 100 is multiplied by to define the predetermined interval P and the heat transfer rate at the groove 70. Note that in the graph of Fig. 7, the value "100" of the heat transfer rate indicates the heat transfer rate of a tire which is not provided with the projection 100 (reference value). The coefficient can also be expressed as the ratio of the predetermined interval P to the length L, P/L.

As illustrated in Fig. 8, when the projection 100 satisfies 0.75L ≤ P, the number of the projections 100 provided in the groove 70 is not too many, and it is possible to curb the decrease of the air speed flowing through the groove 70. When the projection 100 satisfies P ≤ 10L, the number of the projections 100 provided in the groove 70 is not too few, and the air flows AR1 and AR2 change into spiral (swirling) flows effectively.

In addition, it is preferable to satisfy the relation 1.25L < P, it is more preferable to satisfy the relation 1.5L < P, and it is further preferable to satisfy the relation 2.0L < P. By satisfying these relationships, the number of the projections 100 provided in the groove 70 will be more suitable. In addition, since the area of the groove bottom 72 on which the air flows AR1 and AR2 pass is not too small, heat is dissipated efficiently from the groove bottom 72. With this, as illustrated in Fig. 8, the heat transfer rate exceeds the value "103" where the effect is positively obtained when the tire is mounted, and the certainty of the effect of suppressing the temperature rise of the tread part 10 is improved.

In addition, for the tire 1 according to this embodiment, when H is the height of the projection 100 from the groove bottom 72, and D is the depth from the tread ground contact surface 11 of the groove 70 to the groove bottom 72, it is preferable to satisfy the relation 0.03D < H ≤ 0.4D.

Here, Fig. 9 shows a graph illustrating measurement results of measuring the relationship between a coefficient which the groove depth D is multiplied by to define the height H and the heat transfer rate at the groove 70. Note that in the graph of Fig. 9, the value "100" of the heat transfer rate indicates the heat transfer rate of a tire which is not provided with the projection 100 (reference value). The coefficient can also be expressed as the ratio of the height H to the groove depth D, H/D.

As illustrated in Fig. 9, when the relation 0.03D < H is satisfied, the height H of the projection 100 is larger than or equal to a predetermined height, which makes it possible to efficiently change the air flows AR1 and AR2 flowing in the groove 70 into spiral flows. This increases the amount of air passing through the groove bottom 72, and dissipates heat efficiently from the tread part 10. When the relation H ≤ 0.4D is satisfied, the air flows AR1 and AR2 changed into spiral flows are likely to reach the groove bottom 72, and accordingly heat is dissipated efficiently from the groove bottom 72.

Moreover, when the relation 0.05D ≤ H is satisfied and the relation H ≤ 0.35D is satisfied, as illustrated in Fig. 9, the heat transfer rate exceeds the value "103" where the effect is positively obtained when the tire is mounted, and the certainty of the effect of suppressing the temperature rise of the tread part 10 is improved.

In addition, for the tire 1 according to this embodiment, when the groove width W is the width of the groove 70, it is preferable that the curvature radii R of the curved parts 120 in a tread surface view of the tire 1 be 3 times or more and 10 times or less the groove width W. Specifically, it is preferable that both the curvature radius R1 of the first curved part 121 and the curvature radius R2 of the second curved part 122 be 3 times or more and 10 times or less the groove width W.

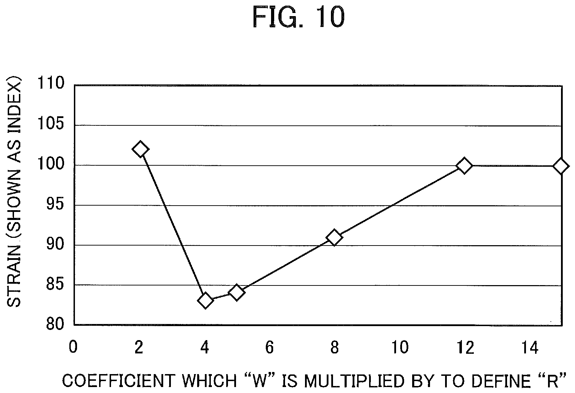

Here, Fig. 10 is a graph illustrating measurement results of measuring the relationship between the curvature radius R and the strain. As illustrated in Fig. 10, when the curvature radius R of the curved parts 120 is 3 times or more the groove width W, even if the projection 100 receives compression force, the strain is prevented from being concentrated at the center part of the projection 100. On the other hand, when the curvature radius R of the curved parts 120 are 10 times or less the groove width W, the shape of the curved parts 120 are prevented from being close to a straight line. This disperses the shear deformation due to the compression force to the curved parts 120 (the first curved part 121 and the second curved part 122) and positively curbs the occurrence of a crack.

Note that it is more preferable that the curvature radius R of the curved parts 120 be 3.5 times or more and 8 times or less the groove width W. This makes it possible to positively curb the occurrence of a crack, while suppressing the temperature rise.

In addition, for the tire 1 according to this embodiment, it is preferable that the width W100 of the projection 100 be 1 mm or more and 4 mm or less. When the width W100 of the projection 100 is 1 mm or more, since it is possible to hold the rigidity of the projection itself for stably generating turbulences, it is possible to generate turbulences to obtain the heat transfer rate, and positively curb the temperature rise. In addition, it is possible to curb the occurrence of molding defects such as short molding during the tire manufacturing.

On the other hand, when the width W100 of the projection 100 is 4 mm or less, it is possible to make wide the area of the groove bottom 72 other than the projections 100, which improves the effect of cooling the groove bottom 72 by the air flows AR1 and AR2.

### [Modification 1]

Next, a tire 1 according to Modification 1 of the first embodiment will be described. Note that the tire 1 according to this embodiment has a different configuration of the projection, compared to the tire 1 according to the first embodiment describe above. Hence, in the following, descriptions will be provided focusing the configuration of the projection.

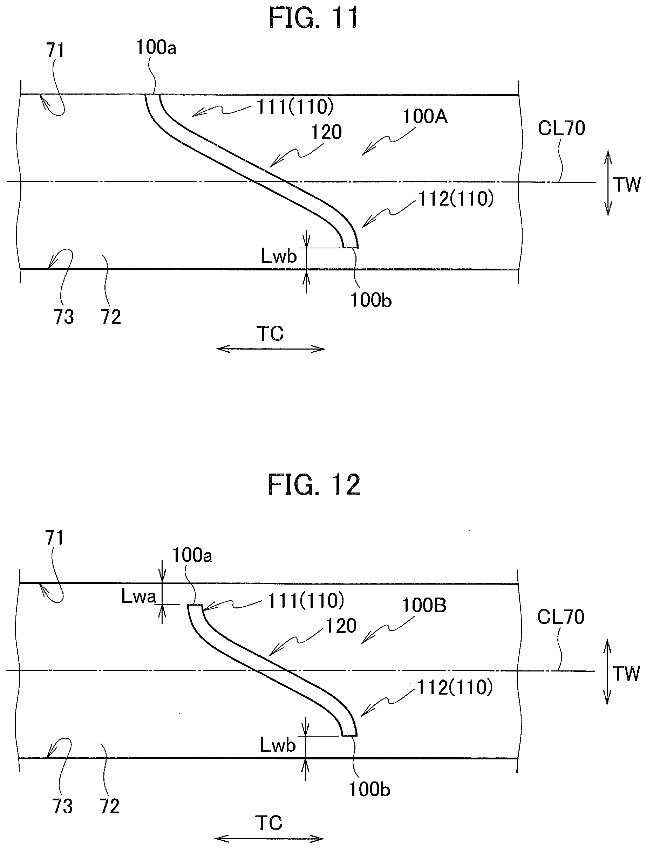

Here, Fig. 11 is an enlarged plan view of a projection 100A according to Modification 1 of the first embodiment. The projection 100A according to this embodiment extends from one groove wall 71 forming a groove 70 and toward the other groove wall 73 forming the groove 70, and terminates short of the other groove wall 73.

Specifically, an end 100b of the projection 100A on the other groove wall 73 side forms a terminal part 100b terminating short of the other groove wall 73. Note that an end 100a of the projection 100A on the one groove wall 71 side continues to the one groove wall 71.

The tire 1 according to this embodiment, when the tire rolls, even if land parts 80 on both sides of the groove 70 are deformed, although the projection 100A receives compression force only from the one land part 80, it is possible to prevent reception of the compression force from the land parts 80 on both sides. This suppresses the compression force that the projection 100A receives from the land part 80, compared to the case where the projection 100A continues from the one groove wall 71 to the other groove wall 73. Hence, it is possible to curb the occurrence of a crack in the projection 100A, while suppressing the temperature rise of the tread part.

For the projection 100A, it is preferable that the groove wall distance Lwb between the terminal part 100b of the projection 100A terminating short of the other groove wall 73 and the other groove wall 73 be within the range of 0.1 times or more and 0.4 times or less the groove width W.

When the groove wall distance Lwb is 0.1 times or more the groove width W, it is possible to more positively reduce the compression force received by the projection 100A from the other groove wall 73, which is propagated through a groove bottom 72. This curbs the occurrence of a crack in the projection 100A.

On the other hand, when the groove wall distance Lwb is 0.4 times or less the groove width W, since it is possible to cause the air flowing in the groove 70 to collide with the projection 100A to more positively generate the air flows AR1 and AR2 that go over the projection 100A, it is also possible to obtain the effect of suppressing the temperature rise of the tread part 10.

Note that it is more preferable that the groove wall distance Lwb be 0.3 times or more and 0.4 times or less the groove width W. This makes it possible to more positively curb the occurrence of a crack in the projection 100A, while suppressing the temperature rise of the tread part 10.

### [Modification 2]

Next, descriptions will be provided for a tire 1 according to Modification 2 of the first embodiment. Note that the tire 1 according to this embodiment has a different configuration of the projection, compared to the tire 1 according to the first embodiment described above. Hence, in the following, descriptions will be provided focusing the configuration of the projection.

Here, Fig. 12 is an enlarged plan view of a projection 100B according to Modification 2 of this first embodiment. The projection 100B according to this embodiment includes one end 100a positioned on the side of one groove wall 71 forming a groove 70 and the other end 100b positioned on the side of the other groove wall 73 forming the groove 70.

The one end 100a is away from the one groove wall 71, and the other end 100b is away from the other groove wall 73. In other words, the ends 100a and 100b of the projection 100B are away from the groove walls 71 and 73 of the groove 70.

According to the tire 1 of this embodiment, when the tire rolls, even though land parts 80 on both sides of the groove 70 are deformed, it is possible to prevent the projection 100B from receiving the compression force from the land parts 80 on both sides. Since this reduces the compression force received from the land parts 80 significantly, compared to the case where the projection 100B continues to either the one groove wall 71 or the other groove wall 73, it is possible to curb the occurrence of a crack in the projection 100B.

For the projection 100B, it is preferable that the groove wall distance Lwa between the one end 100a of the projection 100B and the one groove wall 71 and the groove wall distance Lwb between the other end 100b of the projection 100B and the other groove wall 73 be within the range of 0.1 times or more and 0.4 times or less the groove width W.

When groove wall distances Lwa and Lwb are 0.1 times or more the groove width W, it is possible to more positively reduce the compression force received by the projection 100B from the one groove wall 71 and the other groove wall 73, which is propagated through a groove bottom 72. This curbs the occurrence of a crack in the projection 100B more positively.

On the other hand, when groove wall distances Lwa and Lwb are 0.4 times or less the groove width W, since it is possible to cause the air flowing in the groove 70 to collide with the projection 100B to more positively generate the air flows AR1 and AR2 that go over the projection 100B, it is also possible to obtain the effect of suppressing the temperature rise of the tread part 10.

Note that it is more preferable that groove wall distances Lwa and Lwb be 0.3 times or more and 0.4 times or less the groove width W. This makes it possible to more positively curb the occurrence of a crack in the projection 100B, while suppressing the temperature rise of the tread part 10.

In this embodiment, the groove wall distance Lwa is the same as the groove wall distance Lwb. However, the groove wall distance Lwa does not necessarily need to be the same as the groove wall distance Lwb. For example, in the case where the one groove wall 71 is deformed more than the other groove wall 73, the relationship between the groove wall distance Lwa and the groove wall distance Lwb may satisfy Lwa > Lwb.

### [Example]

Next, descriptions will be provided for an example carried out to confirm the effect of the tire according to the embodiment of the present invention. First, Comparative Example 1 and Examples 1 to 4 described below were prepared.

For Comparative Example 1, a tire in which the projection formed in a groove linearly continued from one groove wall to the other groove wall was used.

For Example 1, a tire according to the above first embodiment was used. Specifically, a tire in which the projection continues from one groove wall to the other groove wall was used. Note that in the tire according to Example 1, both the curvature radius of a first curved part and the curvature radius of a second curved part are 60 mm.

For Examples 2 and 3, tires according to Modification 1 of the above first embodiment were used. Specifically, for Examples 2 and 3, tires in which the projection extends from one groove wall to the other groove wall, and terminates short of the other groove wall 73 as illustrated in Fig. 11 were used.

Note that in the tire according to Example 2, both the curvature radius of the first curved part and the curvature radius of the second curved part are 60 mm.

In the tire according to Example 3, both the curvature radius of the first curved part and the curvature radius of the second curved part are 80 mm.

For Example 4, a tire according to Modification 2 of the above first embodiment was used. Specifically, for Example 4, a tire in which both ends of the projection are away from both groove walls of the groove as illustrated in Fig. 12 was used. Note that in the tire according to Example 4, both the curvature radius of the first curved part and the curvature radius of the second curved part are 60 mm.

Note that the tire size and the rim width of all of Comparative Example 1 and Examples 1 to 4 are as follows.

- tire size: 11R22.5
- rim width: 8.25 × 22.5

Next, an internal pressure 700 kPa (standard internal pressure) and a load 3000 kg (about 110% load) were applied to the above Comparative Example 1 and Examples 1 to 4, and rolling tests were conducted using a drum tire testing machine with a drum diameter of 1.7 m. In the rolling tests, after rolling of 50000 km at 65 km/h, the length of the crack generated in the projection was measured.

The heat dissipation properties of Comparative Example 1 and Examples 1 to 4 were also evaluated. Specifically, the heat dissipation properties were evaluated based on the measurement results obtained by conducting the tests for measuring each heat conductivities.

Note that Table 1 shows the measurement results of the rolling tests and the measurement results of the heat conductivities. The heat conductivities shown in Table 1 are indicated by an index using Comparative Example 1 as a reference, and the larger value indicates the higher heat conductivity. In Table 1, the heat conductivity of Comparative Example 1 is indicated as "100".

**[Table 1]**

| | Comparative Example 1 | Example 1 | Example 2 | Example 3 | Example 4 |
|---|---|---|---|---|---|
| Length of Crack | 6.0 mm | 3.0 mm | 1.4 mm | 2.0 mm | 0.5 mm |
| Thermal Conductivity [INDEX] | 100 | 101 | 100 | 100 | 100 |

As shown in Table 1, it was confirmed that the lengths of the cracks generated in the projections of the tires according to Examples 1 to 4 were reduced significantly, compared to the tire according to Comparative Example 1. In other words, it was confirmed that the tires according to Examples 1 to 4 curb the occurrence of a crack in the projection.

It was also confirmed that the tires according to Examples 1 to 4 have the same level of heat conductivity as in the tire according to Comparative Example 1 and are capable of sufficiently suppressing the temperature rise of the tread part 10.

### [Other Embodiments]

Next, other embodiments of the present invention will be described. Although the tire 1 is preferably used for a heavy duty tire (TBR tire) mounted on a truck or a bus (TB), the tire 1 may be used, for example, for a tire for construction vehicles (ORR tires), such as dump trucks and articulated dump trucks running on crushed stones, mines, and dam sites, or may be used for a tire for passenger vehicles.

In the above embodiment, descriptions were provided taking an example where the groove 70 extends in parallel along the tire circumferential direction TC. However, the groove 70 may be inclined by several degrees (for example, 10 degrees or less) with respect to the tire circumferential direction TC.

Although in the above embodiments, the projection 100 includes the two curved parts as the curved parts 120, the first curved part 121 curving in one direction of the tire circumferential direction TC and the second curved part 122 curving in the other direction of the tire circumferential direction TC, the present invention is not limited thereto. The projection 100 may include three or more curved parts 120.

For example, in the case where the one groove wall 71 is deformed more than the other groove wall 73, the number of the curved parts 120 arranged on the one groove wall 71 side of the rectilinear part 110 may be larger than the number of the curved parts 120 arranged at the other groove wall 73 side of the rectilinear part 110. Moreover, for the projection 100, rectilinear parts 110 and curved parts 120 may be arranged alternately.

In the embodiment above, the descriptions are provided taking an example where the angle θ1 formed between the extending direction of the rectilinear part 110 of the projection 100 and the tire circumferential direction TC is within the range of 10 to 60 degrees. However, the invention is not limited thereto. The angle θ1 may be out of the range of 10 to 60 degrees.

In the same way as above, the present invention naturally includes various embodiments and the like which are not described herein. Further, various aspects of the invention can be created by appropriately combining multiple constituents disclosed in the above embodiments. Hence, the technical scope of the present invention is defined only by the matters used to specify the invention according to the claims, which are reasonable from the above descriptions.

### [DELETED]

### INDUSTRIAL APPLICABILITY

The present invention makes it possible to provide a tire in which the durability of the projection is improved by curbing the occurrence of a crack in the projection formed in the groove, while positively suppressing the temperature rise of the tread part.

### REFERENCE SIGNS LIST

- 1: tire
- 5: standard rim
- 10: tread part
- 20: side wall
- 30: bead
- 40: belt layer
- 52: carcass layer
- 70: groove
- 71: groove wall
- 72: groove bottom
- 73: groove wall
- 100, 100A, 100B: projection
- 110: rectilinear part
- 120: curved part
- 121: first curved part
- 122: second curved part

## Claims

1. A tire (1) in which a groove (70) extending in a tire circumferential direction (TC) is formed in a tread part (10), wherein
a projection (100) extending in a direction intersecting the tire circumferential direction (TC) is provided at a groove bottom (72) of the groove (70), and
the projection (100) includes in a tread surface view of the tire (1):
a rectilinear part (110) extending linearly at the center of the groove (70) in a direction inclined to the tire circumferential direction (TC) and intersecting a center line (CL70) of the groove (70) in a width direction of the groove (70), the center line (CL70) of the groove (70) passing along the center of the groove (70) in the width direction the groove (70); and
at least two curved parts (120) continuing to the rectilinear part (110) and curving toward the tire circumferential direction (TC), wherein
the projection (100) includes, as the at least two curved parts (120), a first curved part (121) curving from one end (110a) of the rectilinear part (110) in one direction of the tire circumferential direction (TC) and a second curved part (122) curving from the other end (110b) of the rectilinear part (110) in the other direction of the tire circumferential direction (TC).

2. The tire (1) according to claim 1, wherein
when a groove width W is a width of the groove (70), a curvature radius of the at least two curved parts (120) is 3 times or more and 10 times or less the groove width W in the tread surface view of the tire (1).

3. The tire (1) according to claim 1 or 2, wherein
the projection (100) continues from one groove wall (71) forming the groove (70) to the other groove wall (73) forming the groove (70).

4. The tire (1) according to claim 1 or 2, wherein
the projection (100) extends from one groove wall (71) forming the groove (70) toward the other groove wall (73) forming the groove (70), and terminates short of the other groove wall (73).

5. The tire (1) according to claim 4, wherein
when a groove width W is a width of the groove (70), a groove wall distance Lwb between a terminal part (100b) of the projection (100) terminating short of the other groove wall (73) and the other groove wall (73) is 0.1 times or more and 0.4 times or less the groove width W.

6. The tire (1) according to claim 1 or 2, wherein
the projection (100) includes one end positioned on a side of one groove wall (71) forming the groove (70) and the other end positioned on a side of the other groove wall (73) forming the groove (70), and
the one end is away from the one groove wall (71) and the other end is away from the other groove wall (73).

7. The tire (1) according to claim 6, wherein
when a groove width W is a width of the groove (70), a groove wall distance Lwa between the one end of the projection (100) and the one groove wall (71), and a groove wall distance Lwb between the other end of the projection (100) and the other groove wall (73) are 0.1 times or more and 0.4 times or less the groove width W.

8. The tire (1) according to any one of claims 1 to 7, wherein
an angle formed between an extending direction of the rectilinear part (110) and the tire circumferential direction (TC) is within a range of 10 to 60 degrees.

## Patentansprüche

1. Reifen (1), in dem eine Rille (70), die sich in einer Reifenumfangsrichtung (TC) erstreckt, in einem Laufflächenteil (10) geformt ist, wobei
ein Vorsprung (100), der sich in einer Richtung erstreckt, welche die Reifenumfangsrichtung (TC) schneidet, an einer Rillensohle (72) der Rille (70) bereitgestellt wird und
der Vorsprung (100) in einer Laufflächenansicht des Reifens (1) Folgendes einschließt:
einen geradlinigen Teil (110), der sich linear an der Mitte der Rille (70) in einer Richtung erstreckt, die zu der Reifenumfangsrichtung (TC) geneigt ist und eine Mittellinie (CL70) der Rille (70) in einer Breitenrichtung der Rille (70) schneidet, wobei die Mittellinie (CL70) der Rille (70) entlang der Mitte der Rille (70) in der Breitenrichtung der Rille (70) verläuft, und
mindestens zwei gekrümmte Teile (120), die sich zum geradlinigen Teil (110) fortsetzen und sich zu der Reifenumfangsrichtung (TC) hin krümmen, wobei
der Vorsprung (100), als die mindestens zwei gekrümmten Teile (120), einen ersten gekrümmten Teil (121), der sich von dem einen Ende (110a) des geradlinigen Teils (110) aus in der einen Richtung der Reifenumfangsrichtung (TC) krümmt, und einen zweiten gekrümmten Teil (122), der sich von dem anderen Ende (110b) des geradlinigen Teils (110) aus in der anderen Richtung der Reifenumfangsrichtung (TC) krümmt, einschließt.

2. Reifen (1) nach Anspruch 1, wobei,
wenn eine Rillenbreite W eine Breite der Rille (70) ist, ein Krümmungsradius der mindestens zwei gekrümmten Teile (120) das Dreifache oder mehr und das Zehnfache oder weniger der Rillenbreite W in der Laufflächenansicht des Reifens (1) beträgt.

3. Reifen (1) nach Anspruch 1 oder 2, wobei
sich der Vorsprung (100) von der einen Rillenwand (71), welche die Rille (70) bildet, zu der anderen Rillenwand (73), welche die Rille (70) bildet, fortsetzt.

4. Reifen (1) nach Anspruch 1 oder 2, wobei
sich der Vorsprung (100) von der einen Rillenwand (71), welche die Rille (70) bildet, zu der anderen Rillenwand (73), welche die Rille (70) bildet, hin erstreckt und kurz vor der anderen Rillenwand (73) endet.

5. Reifen (1) nach Anspruch 4, wobei,
wenn eine Rillenbreite W eine Breite der Rille (70) ist, eine Rillenwandentfernung Lwb zwischen einem abschließenden Teil (100b) des Vorsprungs (100), der kurz vor der anderen Rillenwand (73) endet, und vor der anderen Rillenwand (73) das 0,1-Fache oder mehr und das 0,4-Fache oder weniger der Rillenbreite W beträgt.

6. Reifen (1) nach Anspruch 1 oder 2, wobei
der Vorsprung (100) das eine Ende, das auf einer Seite der einen Rillenwand (71), welche die Rille (70) bildet, angeordnet ist, und das andere Ende, das auf einer Seite der anderen Rillenwand (73), welche die Rille (70) bildet, angeordnet ist, einschließt und
das eine Ende von der einen Rillenwand (71) entfernt ist und das andere Ende von der anderen Rillenwand (73) entfernt ist.

7. Reifen (1) nach Anspruch 6, wobei,
wenn eine Rillenbreite W eine Breite der Rille (70) ist, eine Rillenwandentfernung Lwa zwischen dem einen Ende des Vorsprungs (100) und der einen Rillenwand und eine Rillenwandentfernung Lwb zwischen dem anderen Ende des Vorsprungs (100) und der anderen Rillenwand (73) das 0,1-Fache oder mehr und das 0,4-Fache oder weniger der Rillenbreite W betragen.

8. Reifen (1) nach einem der Ansprüche 1 bis 7, wobei
ein Winkel, der zwischen einer Ausdehnungsrichtung des geradlinigen Teils (110) und der Reifenumfangsrichtung (TC) gebildet wird, innerhalb eines Bereichs von 10 bis 60 Grad liegt.

## Revendications

1. Bandage pneumatique (1), dans lequel une rainure (70) s'étendant dans une direction circonférentielle du bandage pneumatique (TC) est formée dans une partie de bande de roulement (10), dans lequel :
une saillie (100) s'étendant dans une direction coupant la direction circonférentielle du bandage pneumatique (TC) est formée au niveau d'un fond de rainure (72) de la rainure (70) ; et
la saillie (100) inclut, dans une vue de la surface de bande de roulement du bandage pneumatique (1) :
une partie rectiligne (110) s'étendant de manière linéaire au niveau du centre de la rainure (70) dans une direction inclinée vers la direction circonférentielle du bandage pneumatique (TC) et coupant une ligne médiane (CL70) de la rainure (70), dans une direction de la largeur de la rainure (70), la ligne médiane (CL70) de la rainure (70) passant le long du centre de la rainure (70), dans la direction de la largeur de la rainure (70) ; et
au moins deux parties courbées (120) se prolongeant jusqu'à la partie rectiligne (110) et courbées vers la direction circonférentielle du bandage pneumatique (TC), dans lequel ;
la saillie (100) inclut, sous forme des au moins deux parties courbées (120), une première partie courbée (121) courbée à partir d'une extrémité (110a) de la partie rectiligne (110) dans une direction de la direction circonférentielle du bandage pneumatique (TC), et une deuxième partie courbée (122) courbée à partir de l'autre extrémité (110b) de la partie rectiligne (110) dans l'autre direction de la direction circonférentielle du bandage pneumatique (TC).

2. Bandage pneumatique (1) selon la revendication 1, dans lequel :
lorsqu'une largeur de rainure W constitue une largeur de la rainure (70), un rayon de courbure des au moins deux parties courbées (120) représente 3 fois ou plus et 10 fois ou moins la largeur de rainure W dans la vue de la surface de bande de roulement du bandage pneumatique (1).

3. Bandage pneumatique (1) selon les revendications 1 ou 2, dans lequel :
la saillie (100) se prolonge d'une paroi de rainure (71) formant la rainure (70) vers l'autre paroi de rainure (73) formant la rainure (70).

4. Bandage pneumatique (1) selon les revendications 1 ou 2, dans lequel :
la saillie (100) s'étend d'une paroi de rainure (71) formant la rainure (70) vers l'autre paroi de rainure (73) formant la rainure (70) et se termine peu avant l'autre paroi de rainure (73).

5. Bandage pneumatique (1) selon la revendication 4, dans lequel :
lorsqu'une largeur de rainure W constitue une largeur de la rainure (70), une distance entre les parois de rainure Lwb, entre une partie terminale (100b) de la saillie (100) se terminant peu avant l'autre paroi de rainure (73) et l'autre paroi de rainure (73) représente 0,1 fois ou plus et 0,4 fois ou moins la largeur de rainure W.

6. Bandage pneumatique (1) selon les revendications 1 ou 2, dans lequel :
la saillie (100) inclut une extrémité positionnée sur un côté d'une paroi de rainure (71) formant la rainure (70) et l'autre extrémité positionnée sur un côté de l'autre paroi de rainure (73) formant la rainure (70) ; et
ladite une extrémité est écartée de la paroi de rainure (71), l'autre extrémité étant écartée de l'autre paroi de rainure (73).

7. Bandage pneumatique (1) selon la revendication 6, dans lequel :
lorsqu'une largeur de rainure W constitue une largeur de la rainure (70), une distance entre les parois de rainure Lwa, entre ladite une extrémité de la saillie (100) et ladite une paroi de rainure (71), et une distance entre les parois de rainure Lwb entre ladite autre extrémité de la saillie (100) et ladite autre paroi de rainure (73) représentent 0,1 fois ou plus et 0,4 fois ou moins la largeur de rainure W.

8. Bandage pneumatique (1) selon l'une quelconque des revendications 1 à 7, dans lequel :
un angle formé entre une direction d'extension de la partie rectiligne (110) et la direction circonférentielle du bandage pneumatique (TC) est compris dans un intervalle allant de 10 à 60 degrés.
